## Europäisches Patentamt
## European Patent Office
## Office européen des brevets

(19)

(11) Veröffentlichungsnummer : **0 146 526
B1**

(12) **EUROPÄISCHE PATENTSCHRIFT**

(45) Veröffentlichungstag der Patentschrift :
30.09.87

(51) Int. Cl.⁴ : **C 02 F 11/00, C 02 F 11/18,
C 07 B 41/00, B 04 B 15/02**

(21) Anmeldenummer : **84890201.1**

(22) Anmeldetag : **30.10.84**

(54) **Verfahren zur Herstellung von organischen Stoffen oder Hydrolysaten aus Abwässerschlämmen zur Gewinnung von biotechnisch verwertbaren Substraten.**

(30) Priorität : 11.11.83 AT 3983/83

(43) Veröffentlichungstag der Anmeldung :
26.06.85 Patentblatt 85/26

(45) Bekanntmachung des Hinweises auf die Patenterteilung : 30.09.87 Patentblatt 87/40

(84) Benannte Vertragsstaaten :
CH DE FR GB IT LI SE

(56) Entgegenhaltungen :
EP-A- 0 119 987
DE-A- 1 432 874
DE-A- 2 749 282
FR-A- 1 029 374
FR-A- 2 383 132
GB-A- 1 525 451

(73) Patentinhaber : VOEST-ALPINE Aktiengesellschaft
Friedrichstrasse 4
A-1011 Wien (AT)

(72) Erfinder : Janusch, Alois, Dipl.-Ing.
Theodoraweg 1
A-8706 Leoben (AT)
Erfinder : Hanke, Reinhart, Dipl.-Ing.
Annaberggasse 2
A-8700 Leoben (AT)

(74) Vertreter : Haffner, Thomas M., Dr. et al
Patentanwaltskanzlei Dipl.-Ing. Adolf Kretschmer Dr.
Thomas M. Haffner Schottengasse 3a
A-1014 Wien (AT)

EP 0 146 526 B1

## Beschreibung

Die Erfindung bezieht sich auf ein Verfahren zum Herstellen von Hydrolysaten aus Abwasserschlämmen und sonstigen organischen Substanzen zur Gewinnung von biotechnisch verwertbaren Substraten sowie eine Vorrichtung zur Durchführung dieses Verfahrens. Bei der Aufarbeitung von z. B. Abwasserschlämmen wurde bisher in der Regel eine weitgehende Entwässerung versucht, so daß ein mehr oder minder wasserarmer Feststoff und eine Lösung für die weitere Behandlung zur Verfügung stehen. Der mehr oder minder wasserarme Feststoff wurde beispielsweise deponiert oder zur Bereitung von Kompost oder als Brennstoff verwendet. Die bei der Trocknung anfallende Wassermenge wurde in der Folge beispielsweise einer biologischen Aufarbeitung in Klärbecken oder einer oxidativen Zerstörung der organischen Substanzen unterworfen. Die biologische Aufarbeitung dieses aus der Entwässerung der Abwasserschlämme erhaltenen Abwassers erfolgt in der Regel in einer biologischen Abwasserreinigung. In diesen Anlagen können jedoch keine selektiven Behandlungen von derartigen Abwassern vorgenommen werden und es wurden eine Reihe darin enthaltener interessanter wiederverwertbarer Rohstoffe durch den biologischen Abbau zerstört.

Aus der älteren EP-A-119 987 ist eine mechanische Entwässerungseinrichtung bekanntgeworden, bei welcher durch gleichzeitige Anwendung von mechanischen Preß- bzw. Zentrifugalkräften und Beaufschlagung mit Sattdampf eine Verbesserung der Entwässerungsleistung erzielt wird.

Die GB-A-1 525 451 beschreibt die Aufbereitung von Abwasserschlämmen mit organischen Materialien durch hydrolytische Spaltung in Gegenwart von Säure oder Lauge. Aus der FR-PS 1 029 374 ist es bekannt, Stoffgemische in mit Dampf beaufschlagten Zentrifugen aufzutrennen.

Für die Herstellung von Hydrolysaten aus organische Substanzen enthaltenden Schlämmen ist es bekannt, Dampf in die Suspension derartiger organischer Substanzen einzuleiten. Die Ausbeute an möglichen Hydrolysaten aus den organischen Substanzen ist bei dieser Verfahrensweise gering und die Hydrolysate fallen in einer Mischung an, welche eine selektive Aufarbeitung in der Regel nicht zuläßt. Durch das Einleiten von Dampf in die Suspension derartiger organischer Feststoffe verlaufen bei der Herstellung von Hydrolysaten eine Reihe von Reaktionen, welche z. B. bei Schlämmen zu biologisch schwer abbaubaren organischen Substanzen führen.

Die Erfindung zielt nun darauf ab, Abwässer und Abwasserschlämme in einer Weise zu hydrolysieren, daß eine Fraktionierung der Hydrolysate ermöglicht wird, so daß in der Folge die Möglichkeit geschaffen wird, die einzelnen getrennt anfallenden Hydrolysate einer selektiven Aufarbeitung zur Bildung von wertvollen Rohstoffen zu unterziehen. Im besonderen zielt die Erfindung hiebei darauf ab, bei der Hydrolyse unerwünschte Umsetzungsprodukte hintanzuhalten. Zur Lösung dieser Aufgabe besteht die Erfindung im wesentlichen darin, daß die Abwasserschlämme bzw. organische Substanzen nach einem Eindicken oder im vorbehandelten Zustand in wenigstens eine Zentrifuge eingebracht werden, daß die Zentrifuge und das eingebrachte Material unter Sattdampf bei 1 bis 40 bar, insbesondere 1 bis 20 bar gesetzt und in der Sattdampfatmosphäre zentrifugiert wird und daß das Zentrifugat kontinuierlich ausgebracht wird, daß der Sattdampfdruck bei Verwendung einer einzelnen Zentrifuge bis zum Ende der Hydrolyse konstant gehalten oder in aufeinanderfolgenden Zentrifugen stufenweise erhöht wird, daß dem Dampf Elutions- und/oder Hydrolysierhilfsmittel, wie z. B. NaOH, $H_3PO_4$ oder $H_2SO_4$, zudosiert wird, und daß die Behandlungszeit in der Zentrifuge bis zu 60 min, vorzugsweise 3-30 min, ist.

Zentrifugen, welche unter der Einwirkung von Sattdampf betrieben wurden, wurden bereits im Zuge von Entwässerungsverfahren für wasserreiche Braunkohle vorgeschlagen und ein derartiges Verfahren ist beispielsweise in der AT-PS 363 905 beschrieben. Bei diesem bekannten Verfahren dient die Einleitung von Sattdampf lediglich der Verbesserung des Trocknungsverfahrens und es wurde auf eine selektive Ableitung von Hydrolyseprodukten kein Augenmerk gelenkt. Demgegenüber erlaubt die Anwendung einer Zentrifuge im Rahmen des erfindungsgemäßen Verfahrens die rasche Ableitung von Hydrolysaten und es wird auf diese Weise die Ausbildung unerwünschter Sekundärprodukte und der Ablauf von Folgereaktionen zurückgedrängt. Die Hydrolysate werden nur relativ kurze Zeit den Dampftemperaturen ausgesetzt und eine rasche Kühlung der Hydrolysate kann beispielsweise im Falle von Kohlenhydraten die nachfolgende Umsetzung, beispielsweise Caramelbildung, verhindern. Die Hydrolysate können in einer derartigen Zentrifuge mit hoher Reinheit abgetrennt werden. Durch Anwendung verschiedener Drucke und verschiedener zugehöriger Sattdampftemperaturen, verschiedener Behandlungszeiten und verschiedener Drehzahlen der Zentrifuge läßt sich ein breites Spektrum an Hydrolysaten selektiv gewinnen und rasch ableiten.

Das erfindungsgemäße Verfahren wird so durchgeführt, daß der Sattdampfdruck bei Verwendung einer einzelnen Zentrifuge bis zum Ende der Hydrolyse konstant bleibt oder in aufeinanderfolgenden Zentrifugen stufenweise erhöht wird. Auf diese Weise können aneinander anschließend verschiedene Hydrolysate fraktioniert gewonnen und einer gesonderten Aufarbeitung zugeführt werden.

Neben der Zudosierung von Elutions- und/oder Hydrolysierhilfsmittel zu dem Dampf besteht aber auch die Möglichkeit, das Aufgabegut in der Zentrifuge im Sinne der gewünschten Hydrolysate (z. B. für Herstellung von Ca-Huminaten) chemisch vorzubehandeln.

Die Umdrehungszahlen der Zentrifuge können zwischen $0\text{-}2\,800\ \text{min}^{-1}$, vorzugsweise zwischen $100\text{-}2\,500\ \text{min}^{-1}$, gewählt werden.

Die gesondert aufgefangenen Hydrolysate enthalten biotechnisch gesondert verwertbare Substrate, wie beispielsweise Kohlenhydrate, Lipide und ähnliches je nach Zusammensetzung der Einsatzstoffe. Auf Grund der Dampfatmosphäre sind diese Hydrolysate steril und können in der Folge durch eine dem gewünschten Produkt entsprechende Fermentation unter Einsatz von empfindlichen und hochspezialisierten Biozönosen weiterverarbeitet werden.

Der getrocknete Rückstand der Hydrolyse kann in der Folge allenfalls einer weiteren Trocknung zugeführt werden und beispielsweise als steriles bodenverbesserndes Mittel oder als Brennstoff eingesetzt werden.

Durch das erfindungsgemäße Verfahren wird die Verwertung fester organischer Stoffe aus verschiedenen Produktionszweigen, wie beispielsweise der Zucker-, Getränke-, Lebensmitteloder Holzindustrie möglich, wobei die Aufarbeitung in besonders wirtschaftlicher Weise erfolgt. Durch die kontinuierliche thermische Hydrolyse können auch aus Rückständen die verwertbaren organischen Substanzen, wie Zucker, Phenole, organische Säuren und andere gesondert voneinander gewonnen werden, wobei in der Folge durch entsprechende Raffination oder durch mikrobiologische Folgeprozesse eine nutzbare Aufarbeitung möglich ist.

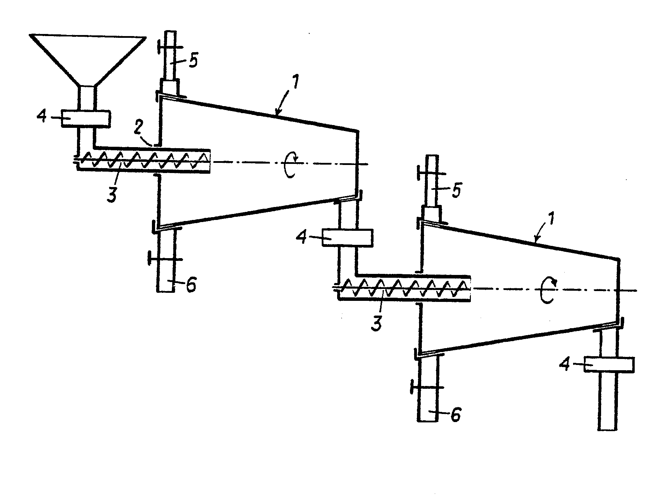

Die Erfindung wird nachfolgend an Hand eines in der Zeichnung schematisch dargestellten Ausführungsbeispieles näher erläutert.

In der Zeichnung ist mit 1 das Gehäuse einer Zentrifuge bezeichnet. Dieses Gehäuses 1 ist druckfest verschließbar und wird über eine Aufgabeöffnung 2 mit dem zu hydrolysierenden Material beschickt. Für die Beschickung ist eine Förderschnecke 3 vorgesehen, der druckfeste Abschluß wird durch eine Druckschleuse 4 sichergestellt. In den Raum der Zentrifuge 1 wird über eine Leitung 5 Dampf eingespeist. Das Zentrifugat kann über die Leitung 6 chargenweise oder kontinuierlich abgezogen werden, wobei der Verschluß so ausgebildet ist, daß im Inneren der Zentrifuge der gewünschte Druck aufrechterhalten werden kann. Innerhalb der Zentrifuge 1 wird im Betrieb der Druck konstant gehalten, so daß in zeitlicher Abfolge über die Leitung 6 verschiedene Hydrolysate abgezogen werden können. Je nach den Erfordernissen kann die Rotationsgeschwindigkeit der Zentrifuge, der Druck und die Aufenthaltszeit verändert werden. Um die Durchsatzleistung zu erhöhen, kann mit Rücksicht auf eine bessere Fraktionierung eine zweite Zentrifuge 1 unter Zwischenschaltung einer Druckschleuse 4 und einer Fördereinrichtung 3 nachgeschaltet werden. In diesem Fall kann die erste Zentrifuge bei konstantem Druck zur Gewinnung eines ersten Hydrolysates herangezogen werden, wohingegen in der zweiten Zentrifuge ein anderer Druck bis zur Herstellung aller gewünschten Fraktionen eingestellt werden.

Die Zentrifuge zeigt zwar die Tendenz, das zu hydrolysierende Material zu verdichten, dafür wird jedoch das Hydrolysat und das kondensierende Wasser sofort abgeschleudert. Die Zentrifuge eignet sich daher für die Hydrolyse von körnigem Material in besonderem Maße, sofern dieses körnige Material hinreichend porös bleibt.

## Patentansprüche

1. Verfahren zum Herstellen von Hydrolysaten aus organischen Stoffen bzw. Abwasserschlämmen und zur Gewinnung von biotechnisch verwertbaren Substraten, dadurch gekennzeichnet, daß die organischen Stoffe oder Abwasserschlämme nach einer entsprechenden Vorbehandlung in wenigstens eine Zentrifuge (1) eingebracht werden, daß die Zentrifuge (1) und das eingebrachte Material unter Sattdampf bei 1 bis 40 bar, insbesondere 1 bis 20 bar, gesetzt und in der Sattdampfatmosphäre zentrifugiert wird und daß das Zentrifugat kontinuierlich ausgebracht wird, daß der Sattdampfdruck bei Verwendung einer einzelnen Zentrifuge (1) bis zum Ende der Hydrolyse konstant gehalten oder in aufeinanderfolgenden Zentrifugen (1) stufenweise erhöht wird, daß dem Dampf Elutions- und/oder Hydrolysierhilfsmittel, wie z. B. NaOH, $H_3PO_4$ oder $H_2SO_4$, zudosiert wird, und daß die Behandlungszeit in der Zentrifuge (1) bis zu 60 min, vorzugsweise 3-30 min, ist.

2. Verfahren nach Anspruch 1, dadurch gekennzeichnet, daß das Aufgabegut trocken oder vorentwässert und/oder chemisch vorbehandelt in die Zentrifuge (1) eingebracht wird.

3. Verfahren nach Anspruch 1 oder 2, dadurch gekennzeichnet, daß die Drehzahl der Zentrifuge (1) bis $2\,800\ \text{min}^{-1}$, vorzugsweise $100\text{-}2\,500\ \text{min}^{-1}$, gewählt wird.

## Claims

1. A process for producing hydrolysates from organic substances or sewage sludges and for obtaining biotechnologically usable substrates, characterised in that the organic substances or sewage sludges are loaded into at least one centrifuge (1) after suitable pre-treatment, that the centrifuge (1) and the loaded material is placed under saturated steam at 1 to 40 bar, more particularly 1 to 20 bar, and is centrifuged in the saturated steam atmosphere and that the centrifugate is continuously removed, that the saturated steam pressure is kept constant until the end of the hydrolysis when a single centrifuge (1) is used or is increased in stages in successive centrifuges (1), that auxiliary elution and/or hydrolising agents are added to the steam, such as for example NaOH, $H_3PO_4$ or $H_2SO_4$, and that the treatment time in the centrifuge (1) is up to 60 min, preferably 3-30 min.

2. A process according to claim 1, characterised in that the charge is placed in the centrifuge (1) dry or previously dehydrated and/or chemically pre-treated.

3. A process according to claim 1 or 2, characterised in that the speed of the centrifuge (1) is selected up to 2 800 min$^{-1}$, preferably 100-2 500 min$^{-1}$.

## Revendications

1. Procédé de préparation de matières hydrolysées à partir de matières organiques ou de boues d'eaux usées, et d'obtention de substrats utilisables en biotechnique, caractérisé en ce que les matières organiques ou les boues d'eaux usées sont introduites après un prétraitement convenable dans au moins une centrifugeuse (1) en ce que la centrifugeuse (1) et la matière introduite sont soumises à de la vapeur saturée à une pression comprise entre 1 et 40 bars, notamment entre 1 et 20 bars, et la matière centrifugée en vapeur saturée, et en ce que le produit de centrifugation est évacué en continu, en ce que la pression de la vapeur saturée est maintenue constante jusqu'à la fin de l'hydrolyse lorsqu'on utilise une seule centrifugeuse (1) ou augmentée par paliers dans des centrifugeuses (1) successives, en ce qu'on ajoute à la vapeur des agents d'élution et/ou d'hydrolyse, tels que NaOH, $H_3PO_4$ ou $H_2SO_4$, et en ce que la durée du traitement dans la centrifugeuse (1) est au maximum de 60 min., de préférence compris entre 3 et 30 min.

2. Procédé selon la revendication 1, caractérisé en ce que le produit est introduit dans la centrifugeuse (1), à l'état sec, ou pré-déshydraté, et/ou chimiquement prétraité.

3. Procédé selon la revendication 1 ou 2, caractérisé en ce que la vitesse de rotation de la centrifugeuse est choisie jusqu'à 2 800 tr/min. de préférence, entre 100 et 2 500 tr/min.